# EUROPÄISCHE PATENTSCHRIFT

(11) **EP 1 454 734 B1**
(45) Veröffentlichungstag und Bekanntmachung des Hinweises auf die Patenterteilung: **29.11.2006**
(21) Anmeldenummer: 03029531.5
(22) Anmeldetag: 21.12.2003
(51) Int. Cl.: B29C 47/76, B29C 47/42, B29C 47/50, B29D 7/00, B29B 13/06, B29K 67/00

(54) **Verfahren zur Verarbeitung von PET**
Method for processing PET
Méthode de traitement du PET

(30) Priorität: 25.07.2003 DE 10334363; 09.02.2003 DE 10305293
(43) Veröffentlichungstag der Anmeldung: 08.09.2004
(73) Patentinhaber: Entex Rust & Mitschke GmbH, 44805 Bochum (DE); MKF Folien GmbH Minderjahn & Kiefer, 13509 Berlin (DE)
(72) Erfinder: Rust, Harald, 44805 Bochum (DE); Abak, Ilmi, 13158 Berlin (DE)
(74) Vertreter: Kaewert, Klaus

(56) Entgegenhaltungen:
- EP-A- 0 336 520
- EP-A- 0 788 867
- EP-A- 0 881 054
- EP-A- 1 132 191
- WO-A-00/32377
- WO-A-20/04009327
- DE-A- 4 308 098
- DE-C- 3 712 749
- DE-C- 19 604 228

## Beschreibung

Die Erfindung betrifft ein Verfahren zur Verarbeitung von PET.
Die weltweite Bedeutung von PET (Polyethylenenterephthalat) ist bereits mit verschiedenen Aufsätzen gewürdigt worden. Zum Beispiel wird verwiesen auf den Aufsatz von Schwarz, Wiederverarbeitung von PET durch reaktive Extrusion, http://www.petnology.com/deutsch/zine/material/beitrage/schwarz_ikv/schwarz_ikv.html. Dort finden sich auch weitere druckschriftliche Nachweise.
Dabei ist auf die Bedeutung für die Verpackung, insbesondere für Getränke, hingewiesen. Entsprechend dieser Bedeutung besteht ein Bedarf nach PET. Darüber hinaus ist mit einer entsprechenden Abfallmenge zu rechnen.
Bei der Abfallwirtschaft ist bei PET eine vorteilhafte Situation gegeben. PET fällt in großem Umfang sortenrein an.
Zum Recycling von PET stehen verschiedene Verfahren zur Verfügung.
Ein Verfahren ist eine rohstoffliches Recycling.
Ein anderes Verfahren ist ein werkstoffliches Recycling. Das werkstoffliche Recycling umfaßt Zerkleinerung, Reinigung und Trocknung des Altmaterials mit anschließender Regranulierung. Die Reinigung ist problematisch. Solange keine 100%ige Reinigung erfolgt, sind die Einsatzmöglichkeiten des Altmaterials eingeschränkt.
Sowohl bei neuem Material als auch bei Altmaterial stellt sich das Problem, daß PET ein Polykondensat ist. Die Monomere werden durch Abspaltung von Wasser verknüpft, so daß Polymere entstehen. Dieser Vorgang ist reversibel. Durch die Einwirkung von Wasser kann PET, vor allem bei hohen Temperaturen, in seine Bestandteile zerfallen.

PET nimmt bei der Lagerung an der Umgebungsluft bis zu 0,5Gew% Wasser auf. Das Wasser gefährdet die Produktqualität. Deshalb ist üblicherweise vor der Verarbeitung eine Trocknung von PET vorgesehen.
Es ist aber auch bekannt, PET ohne eine vorherige Trocknung in einen DoppelschneckenExtruder zu geben und das Wasser in Form eine Entgasung aus der PET-Schmelze abzuziehen. Dabei können auch zwei Entgasungszonen vorgesehen sein.

Das bekannte Verfahren ist jedoch sehr kompliziert, so daß es außerordentlich schwierig ist, eine kommerziell verwendbare PET-Qualität zu erzeugen. Deshalb hat sich das Verfahren bisher nicht durchsetzen können.

Die EP-A-0336520 beschreibt die Aufbereitung von PET unter Verwendung eines Doppelschnecken-Extruders. Dabei wird ungeschmolzenes PET mit Unterdruck beaufschlagt, so daß eine Trocknung des PET stattfindet und der entstehende Dampf abgezogen wird. Der Doppelschneckenextruder besitzt zwei in einem Gehäuse parallel verlaufende und dicht kämmende Schnecken.
Doppelschneckenextruder haben ein ganz bestimmtes Verformungsbild, eine bestimmte Mechanik, ein bestimmtes Durchsatzverhalten und bauen in kürzester Zeit einen hohen Druck auf.
Eine große Extruderlänge zum Entgasen ist vorgesehen. Das ergibt sich aus den Ausführungsbeispielen mit einer Länge 25D bzw. 42D. Das ist ein Längenmaß, das gleich dem 25fachen Durchmesser D der Schnecken bzw. dem 42fachen Durchmesser D der Schnecken ist.

Die WO-A-0032377 beschreibt einen Extruder mit einer Vielzahl von Doppelschnecken, die auf einem Kreisumfang angeordnet sind. Durch die Vervielfachung von Doppelschnecken wird das Prinzip der Doppelschnecken nicht verändert.

Qualitätsprobleme aufgrund der Entgasungsschwierigkeiten mit dem Doppelschneckenextruder werden durch das Verfahren gemäß dem Anspruch 1 gelöst. Nach der Erfindung wird eine optimale Entgasung dadurch erreicht, daß
a) die Entgasung unter Kneten des Einsatzmateriales unterhalb des Glaspunktes des PET, vorzugsweise mindestens 10 Grad Celsius unterhalb des Glaspunktes des PET, noch weitere bevorzugt mindestens 15 Grad Celsius unterhalb des Glaspunktes von PET, und
b) in trockener Atmosphäre erfolgt.

Das Einsatzmaterial hat vorzugsweise eine Granulatform. Das Einsatzmaterial kommt auch in Flakes, Schnitzeln, Platten, Filamenten und Agglomeraten vor. Das schließt alle anderen Formen des Einsatzmateriales, auch Mischungen verschiedener Formen ein. Die Mischungen der Formen können sowohl bei frischem(neu hergestelltem) PET als auch bei recyceltem PET als auch dann vorkommen, wenn recyceltes PET mit einem Zusatz an frischem PET eingesetzt wird oder umgekehrt.

Das erfindungsgemäße Kneten findet ohne Aufschmelzen von PET statt.
Durch das Kneten findet ein Materialaustausch an der Oberfläche der Granulate statt. Dabei kann die an die Oberfläche kommende Feuchtigkeit abdampfen. Das Abdampfen wird durch Erwärmung des Granulats gesteigert.

Jede Erwärmung steigert schon das Abdampfen beim Kneten. So kann die Erwärmung auf mindestens 50 Grad Celsius erfolgen.

Zum Kneten wird ein Planetwalzenextruder oder zumindest ein Planetwalzenextruderabschnitt eingesetzt. Von Planetwalzenextruderabschnitten wird dann gesprochen, wenn ein Extruder sich aus mehreren Abschnitten unterschiedlicher Bauart zusammensetzt.

Ein Planetwalzenextruder besitzt eine Zentralspindel, ein innen verzahntes Gehäuse und zwischen Gehäuseinnenverzahnung und der Zentralspindel verschiedene Planetspindeln. Die Planetspindeln kämmen sowohl mit der Zentralspindel als auch mit dem innen verzahnten Extrudergehäuse. Die Planetspindeln laufen dabei um die Zentralspindel um.
Um das erfindungsgemäße Kneten ohne Aufschmelzen zu bewirken, wird der Planetwalzenextruderabschnitt so eingestellt, daß sich die Materialverformung auf das Kneten ohne Aufschmelzung beschränkt.
Für die Einstellung des Knetens können an dem Planetwalzenextruder verändert werden:
a) das Spiel zwischen den bewegten Planetwalzenteilen
b) die Anzahl der Planetspindeln
c) die Verzahnung der Planetwalzenteile

### Zu a)

Mit dem Spiel zwischen den bewegten Planetwalzenteilen wird das Maß der Verformung bestimmt, dem das Granulat unterliegt, wenn es zwischen die Zähne der Planetwalzenteile gelangt. Je kleiner das Spiel ist, desto stärker wird die Verformung. Je größer das Spiel ist, desto geringer wird die Verformung.

### Zu b)

Das Besondere an Planetwalzenextrudern bzw. an Planetwalzenextruderabschnitten gegenüber Extrudern und Extruderabschnitten anderer Bauart, ist neben einer extremen Verformungsleistung ein Hohlraum zwischen den die Zentralspindel umlaufenden Planetspindeln. In den Hohlraum kann das Granulat strömen.
Der Hohlraum wird durch Änderung der Anzahl der Planetspindeln beeinflußt. Je geringer die Zahl der Planetspindeln ist, desto größer wird der Hohlraum.

### Zu c)

Die Verzahnung kann unterschiedliche Beschaffenheit haben.
Nach der Erfindung ist eine Igelverzahnung vorgesehen.
Die Igelverzahnung ist aus der DE-A-4308098 an sich bekannt.
Die Igelverzahnung ist zur besseren Dispergierung entwickelt worden, nicht als Hilfe bei der Entgasung.
Die Igelverzahnung entsteht vorzugsweise aus der Normalverzahnung.
Die Normalverzahnung von Planetspindeln ist einerseits durch einen Querschnitt gekennzeichnet, wie ihn die ineinander greifenden Zähne der Zahnräder eines Getriebes zeigen. Anderseits verlaufen die Zähne nicht gerade sondern spindelförmig bzw. wie die Gewindegänge eines Schraubgewindes am Umfang entlang.
Die Gewindegänge werden auch in dieser Form in das Ausgangsmaterial der Planetspindeln geschnitten, z.B. gedreht oder gefräst.
Bei den Gewinden wird unterschieden zwischen linksgängem Gewinde und rechtsgängigem Gewinde. Es gibt auch mehrgängige Gewinde.
Die gleiche Unterscheidung findet an Extruderspindeln statt.
Eine Igelverzahnung entsteht, wenn z.B. in eine rechtsgängige Verzahnung eine linksgängig verlaufende Nut ähnlich einem Gewindegang eingearbeitet wird. Durch die Nut werden die Gewindegänge der Planetspindeln unterbrochen. Die Nut kann gleiche oder eine andere (geringer oder größere) Steigung als die Verzahnung der Spindeln besitzen. Die Steigung der Nut weicht vorzugsweise höchstens um 50% von der Steigung der Verzahnung ab.
Die Igelverzahnung kann auf einzelne Planetwalzenteile beschränkt sein. Die Igelverzahnung kann auch in mehreren oder in allen Planetwalzenteilen vorgesehen sein.
Die Igelverzahnung kann ganz oder teilweise die Verzahnung an den Planetwalzenteilen bilden.

Bei teilweise Igelverzahnung an den Planetwalzenteilen kann es gewünscht sein, den normalverzahnten Teil der Planetwalzenteile in Förderrichtung des Extruders am hinter Ende (am austragseitigen Ende der Planetwalzenteile) anzuordnen, um dort einen Förderdruck aufzubauen, der einen Übergang des Granulates in den weiteren Extruderbereich sicherzustellen, der die Aufschmelzung des Granulates bewirkt.

Wahlweise können sich auch igelverzahnte Planetwalzenspindeln mit normal verzahnten Planetwalzenspindeln abwechseln und umgekehrt.
Wahlweise können auch einzelne normalverzahnte Planetwalzenspindeln zwischen igelverzahnten Planetwalzenspindeln angeordnet sein oder umgekehrt.

Sofern die Igelverzahnung in mehreren korrespondierenden Planetwalzenteilen vorgesehen ist, kann die Igelverzahnung so angeordnet werden, daß die Unterbrechungen der Verzahnung im einen Planetwalzenteil mit den Unterbrechnungen im korrespondierenden Planetwalzenteil fluchten oder im Verhältnis zu diesen Unterbrechungen versetzt sind. Der Versatz kann ein Maß haben, das gleich einem Bruchteil der Zahnlücke zwischen zwei Zähnen oder ein Mehrfaches der Zahnlücke zwischen zwei Zähnen ist, wobei ein Mehrfaches auch eine Zahl kleiner 2 sein kann.
Durch die Unterbrechung der Zähne entstehen Öffnungen, in welche das Granulat strömen kann.

Das unter b) beschriebene Hohlraumvolumen und die unter c) beschriebene Igelverzahnung reduzieren den von den Planetwalzenteilen ausgehenden Druckaufbau, so daß das Granulat für eine notwendige Entgasungsdauer in dem Extruder bzw. in dem Extruderabschnitt verbleiben kann.

Vorzugsweise besitzt der Planetwalzenabschnitt eine Länge von höchstens 1200 mm bei einem Durchmesser bis 100 mm in der Verzahnung des Planetwalten-Extrudergehäuses, noch weiter bevorzugt von höchstens 1000 mm. Bei anderen Durchmessern der Verzahnung des Planetwalzen-Extrudergehäuses ergeben sich entsprechend größere oder kleinere maximale Längen.

Beim Kneten wird im Extruder bzw. im Extruderabschnitt in erheblichem Umfang Energie freigesetzt, die sich in dem Granulat als Wärme zeigt. Sofern das Granulat schon mit erheblicher Temperatur in den Planetwalzenextruder bzw. den Planetwalzenextruderabschnitt gelangt, kann es erforderlich werden, die anfallende Wärme durch Kühlung abzuführen. Sofern das Granulat beim Eintritt in den Planetwalzenextruder bzw. den Extruderabschnitt noch keine ausreichende Temperatur hat, unterbleibt obige Kühlung. Gegebenenfalls wird sogar Wärme zugeführt.
Für die Kühlung und/oder Erwärmung sind übliche Temperierungseinrichtungen an Planetwalzenextrudern ausreichend. Üblich ist es, das Gehäuse zweischalig auszuführen und das Temperierungsmittel durch den Zwischenraum zu leiten. Üblich ist auch, die Zentralspindel mit Kanälen zu versehen, durch die gleichfalls Temperierungsmittel geleitet wird. Das übliche Temperierungsmittel ist Wasser oder Öl, mit dem beheizt oder gekühlt wird.

Um dem Granulat eine möglichst günstige Ausgangstemperatur für den Entgasungsvorgang zu geben, wird das Granulat im Extrudereinzug und/oder in einer vorgeschalteten Heizeinrichtung vorgewärmt, bevor es dem erfindungsgemäßen Abdampfvorgang und Entgasungsvorgang zugeführt wird.
Vorzugsweise findet das erfindungsgemäße Abdampfen und Entgasen in einem Extruder mit einem Planetwalzenextruderabschnitt und einer vorgeschalteten Einzugschnecke(Füllteil) statt, die zur Vorwärmung des PET beheizt ist, so daß die Temperierung im Planetwalzenextruderabschnitt sich auf die Kühlung beschränken kann. Vorzugsweise ist die Einzugsschnecke eine Einschnecke.

Über der Einzugschnecke kann in üblicher Weise eine Dosierung mit einem Trichter, ggfs. auch mit einer Dosierschnecke angeordnet sein. Günstig ist, wenn die Dosierung gleichfalls beheizt ist, um die Vorwärmstrecke zu verlängern.

Der bei der Entgasung im Planetwalzenextruderabschnitt anfallende Dampf kann dort abgezogen werden. Dafür können bekannte Entgasungseinrichtungen an Planetwalzenextruderabschnitten genutzt werden.
Vorzugsweise findet jedoch eine Gasabzug durch die Einzugschnecke hindurch statt.
Dazu wird im Einzugsbereich ein Unterdruck (Saugzug) angelegt und wird durch eine bestimmte Dosierung des Granulates sichergestellt, daß der Dampf entlang der Einzugschnecke entweichen kann.

Dabei wird die Einzugschnecke unterfüttert. Die Dosierung wird so gestaltet, daß das eingezogene Granulat höchstens locker in den Gängen der Einzugschnecke liegt. Vorzugsweise werden der Querschnitt der Einzugschnecke über der gesamten Länge nur teilweise ausgefüllt. Dazu ist wahlweise auch durch eine entsprechend große Querschnittsgestaltung bei den Schneckengängen vorgesehen. Die Dimensionsierung der Schneckengänge läßt sich dabei einerseits mit wenigen Versuchen anderseits auch durch Berechnung bestimmen. Maßgebend für die Berechnung sind der vorgesehene Materialdurchsatz und Material.

Das richtige Maß an Knetung und an Unterdruck läßt sich unter Beobachtung der aus dem Extruder austretenden Schmelze leicht kontrollieren. Wenn die Qualität nachläßt, stellen sich in der austretenden Schmelze Blasen bzw. Trübungen ein, während ungefärbtes PET bei richtiger Entgasung klar durchsichtig ist. Die Blasen und Trübungen lassen sich im Regelfall durch Verstärkung des Knetens und/oder durch Verstärkung des Unterdruckes für die Entgasung beseitigen.

Die Anlegung des Unterdruckes erfolgt in einem gekapselten Einzug und ggfs. in einer gekapselten Dosierung.
Die Kapselung kann unter Verwendung eines oder mehrerer Schleusen erfolgen, die von dem Granulat durchwandert werden. Jede Schleuse besteht wahlweise aus einem Behälter und zwei Schließeinrichtungen, die in Durchströmungsrichtung des Behälters vor und hinter dem Behälter angeordnet sind. Es ist im Betrieb einer Schleuse immer mindestens eine der Schließeinrichtungen geschlossen. Beim Schleusenbetrieb ist zu unterscheiden zwischen der Behälterfüllung, der Erzeugung des Unterdrucks im Behälter und der Behälterentleerung.
Bei der Behälterfüllung ist der Behälterausgang geschlossen. Vorzugsweise sind bei Gasabsaugung zur Unterdruckerzeugung der Behälterausgang und der Behältereingang geschlossen. Bei der Behälterentleerung bleibt der Behältereingang geschlossen, während der Behälterausgang geöffnet wird.

Mit nur einer solchen Schleuse entsteht eine diskontinuierliche Dosierung, weil die Dosierung der Schnecke zur Behälterfüllung unterbrochen werden muß.
Mit zwei solchen Schleusen, kann eine kontinuierliche Dosierung erfolgen.
Dabei können die Schleusen parallel geschaltet sein, so daß mit der Entleerung der einen Schleuse auf die andere Schleuse umgeschaltet werden kann.

Dabei können die Schleusen auch hintereinander geschaltet sein. Bei der Hintereinanderschaltung durchläuft das Granulat erst den Behälter in der ersten Schleuse und dann den Behälter in der zweiten Schleuse. Dadurch gibt es auf dem Förderweg des Granulats einen Behälter, welcher dem Extruder am nächsten ist und einen Behälter, welcher einen größer Abstand hat und in Förderrichtung vor dem ersten Behälter angeordnet ist. Bei diesem Konzept wird der Behälter in der zweiten Schleuse aus dem Behälter der ersten Schleuse immer wieder nachgefüllt bevor eine Entleerung stattgefunden hat. Die Öffnung des ersten Behälters erfolgt zum Nachfüllen, wenn der zweite Behälter auf den gleichen Druck wie der erste Behälter gebracht worden ist.

Die Behälter beider Schleusen besitzen vorzugsweise eine Steuerung mit mindestens einem Min-Schalter, der bei Erreichen einer Mindestfiillung Kontakt gibt, und einem Max-Schalter, der bei Erreichen einer maximalen Füllung Kontakt gibt. Der Kontakt bei Erreichen der Mindestfüllung dient der Nachfüllung. Der Kontakt bei Erreichen der maximalen Füllung dient beim Nachfüllen der Beendigung des Füllvorgangs.
Vorteilhafterweise wird das Nachfüllen vereinfacht, wenn austragseitig an den Schleusen besondere Austrageinrichtungen vorgesehen sind, wie zum Beispiel Zellenräder. Die Zellenräder bilden ihrerseits eine Schleuse und zugleich eine Dosierung.
Günstig ist auch eine Beheizung der Schleusen. Das erleichtert die Trocknung und ermöglicht eine Vorentgasung.

Es kommen auch Schleusen in Betracht, die durch eine Schnecke gebildet werden. Diese Schnecke wird nachfolgend Schleusenschnecke genannt.
Die Schleusenschnecke kann ein Seitenextruder sein. Diese Schleusen-Schnecke kann auch eine spezielle Füllschnecke oder Stopfschnecke sein. Nach der Erfindung wird die Schleusen-Schnecke so mit Granulat gefüttert, daß das Granulat eine ausreichende Dichtwirkung entfaltet, um den oben erläuterten Unterdruck mit wirtschaftlichem Aufwand zu bewirken.
Bei ausreichender Schneckenlänge ist die an der Schleusenschnecke zu berücksichtigende Leckage vernachlässigbar. Nach der Erfindung ist eine Lackage vernachlässigbar, deren Ausgleich im Verhältnis zum Absaugen des Abdampfes aus der Entgasungsstation bis zu 10% der Pumpenleistung für das Absaugen erfordert. Selbst eine Verdoppelung der Pumpenleistung zum Ausgleich einer Leckage an der Schleusenschnecke kann noch wirtschaftlich tragbar sein.

Mit einer Schleusenschnecke ist gleichfalls ein kontinuierlicher Materialeintrag in den oben beschriebenen Extruder möglich.

Wahlweise bilden die Schnecken auch nur einen Austrag am Behälter einer Schleuse. Mit der Schnecke kann vorteilhafterweise über den Materialaustrag hinaus eine Auflockerung der Behälterfüllung bewirkt werden.

Während eine Schleusenschnecke durch entsprechende Fütterung zumindest eine weitgehende Abdichtung des Extrudereintrages bewirkt, hat eine Unterfütterung einen Gasdurchlaß zur Folge. Die Unterfütterung kommt nach der Erfindung an der Eintragschnecke des Extruder zur Anwendung. Ziel ist dabei eine Absaugung des Planetwalzenextruderteiles entlang der Einzugschnecke bzw. durch deren Schneckengänge hindurch. Damit ist eine separate Absaugung an dem Planetwalzenextruderabschnitt entbehrlich.

Wahlweise erfolgt die Absaugung zusätzlich oder alternativ über eine unmittelbar an den Planetwalzenabschnitt angeschlossene Leitung. Die Leitung zu einer separaten Pumpe führen. Die Leitung kann auch zu einer gemeinsamen Pumpe führen. Diese gemeinsame Pumpe saugt dann sowohl den gekapselten Extrudereintrag und ggfs. die Dosierung als auch den zur Entgasung vorgesehenen Planetwalzenextruderabschnitt ab. Dabei können Schieber in den Leitungen sicherstellen, daß die Absaugeleistung sich in gewünschter Weise auf die verschiedenen abzusaugenden Bereiche verteilt.

Wahlweise sind noch weitere Pumpen vorgesehen. Zum Beispiel können am Materialeinzug ein Leitungsanschluß und in Förderrichtung vor den Schleusen ein Leitungsanschluß vorgesehen sein, deren Leitungen zu separaten Pumpen führen.

Günstig ist, wenn in Absaugrichtung vor den Pumpen ein Kondensator in der Saugleitung angeordnet ist.

Vorteilhafte Ergebnisse lassen sich auch erzielen, wenn die dem Extruder nächste Schleuse mit einem Schneckenaustrag versehen ist und das Material über ein Fallrohr in den Fallrohr aufgegeben wird.
Vorzugsweise ist auch am Fallrohr eine Gasabsaugung zur weiteren Entgasung oder zur Aufrechterhaltung des bisherigen Unterdruckes vorgesehen.

Günstig ist auch eine Beheizung des Fallrohres zur Verlängerung der Beheizungsstrecke für die Vorwärmung und gegebenenfalls für die Vorentgasung des Materials.

In Extruderrichtung sind hinter der erfindungsgemäßen Entgasung ein oder mehrere Extruderabschnitte vorgesehen, die ein Aufschmelzen des entgasten Granulats bewirken.
Für die verschiedenen Extruderabschnitte ist eine gemeinsame Spindel vorgesehen. Die gemeinsame Spindel wird durch eine Stange/Rohr gebildet, das sich vom Extruderantrieb bis zum Extruderende erstreckt. Auf die Stange/Rohr werden für Aufsätze geschoben, die an gewünschter Stelle die Einzugschnecke und an anderer gewünschter Stelle die Zentralspindel des Planetwalzenextruderabschnittes und an weiterer gewünschter Stelle die Schnecke zum Aufschmelzen des Granulats bilden. Auf der Stange/Rohr werden die verschiedenen Aufsätze verspannt.

Dabei findet je nach Beschaffenheit des PET eine Temperatursteigerung im PET statt. Für diese Aufschmelzung kann ein Extruderabschnitt mit einer herkömmlichen Einschnecke verwendet werden.

Die aus dem Extruder austretende PET-Schmelze kann unterschiedlichen Verwendungen zugeführt werden, z.B. der Verwendung für eine Folie oder für Behältnisse wie Flaschen.

Für die Herstellung von Flaschen aus extrudierter Schmelze stehen verschiedene Verfahren zur Verfügung, die nicht Gegenstand der Erfindung sind. Beispielsweise kann die Schmelze zur Herstellung von Flaschen in eine Form gedrückt oder gespritzt werden. Die bekannten Verfahren zur Flaschenherstellung führen zu einem intermittierenden Bedarf an PET-Schmelze. Deshalb kann es zweckmäßig sein, über den Extruder kontinuierlich in einen Schmelzespeicher zu fahren, der die Schmelze in den notwendigen Abständen in eine Form drückt.

Die Herstellung von Folien ist gleichfalls nicht Gegenstand der Erfindung. Zur Folienherstellung dienen in der Regel Kalander und Glättwerke. Das PET muß mit ausreichender Temperatur zwischen die Kalanderwalzen gefahren werden. Dazu sind verschiedene Verfahren bekannt. Zum Beispiel kann mit einer Breitschlitzdüse gearbeitet werden. Den notwendigen Druckaufbau für die Breitschlitzdüse kann der Extruder leisten. Der Druck kann auch mit einer zwischengeschalteten Schmelzepumpe hochgespannt werden.

In der Zeichnung sind verschiedene Ausführungsbeispiele der Erfindung dargestellt.

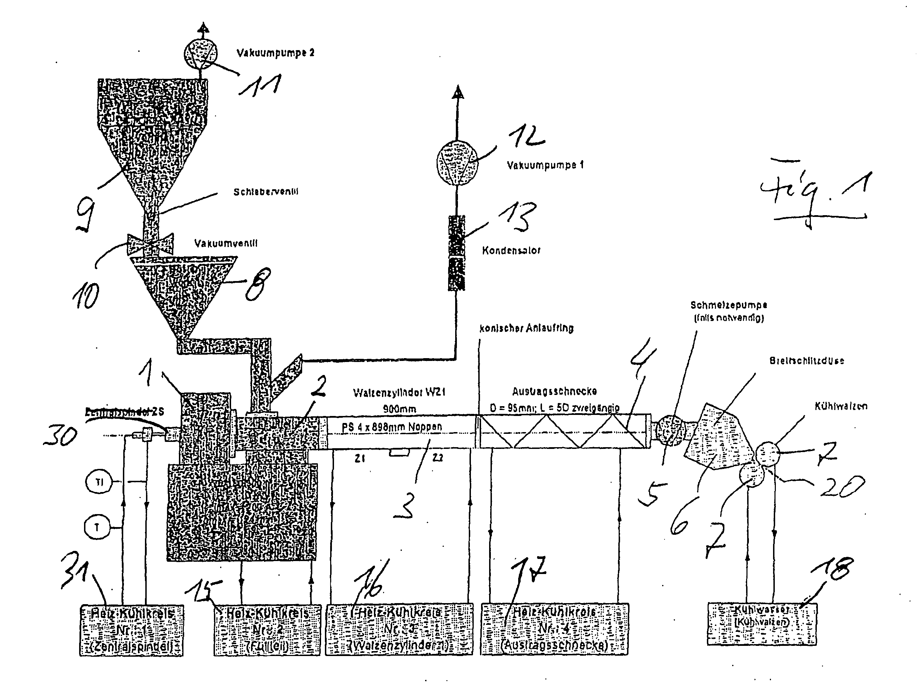

Fig. 1 zeigt einen Extruder mit folgenden Komponenten/Abschnitten: Antrieb 1, Einzug 2, Planetwalzenabschnitt 3, Austragschnecke 4, Schmelzepumpe 5, Breitschlitzdüse 6.
In den Einzug 2 mündet eine Dosierung mit zwei hintereinander geschalteten Schleusen. Zu beiden Schleusen gehören zwei Behälter 8 und 9 und ein zwischengeschalteter Schieber 10. Von dem Behälter 8 führt eine Dosierungsleitung in den Einzug 2.

Der Behälter 9 wird in nicht dargestellter Form mit PET-Granulat gefüllt und geschlossen. Anschließend wird mittels der Pumpe 11 ein Unterdruck an den Behälter 9 angelegt. Damit wird die eingeschlossene Luft weitgehend abgesaugt. Zugleich findet eine Erwärmung zur Trocknung des PET-Granulats statt.
Aus dem Behälter 9 wird das erwärmte PET-Granulat bei geöffnetem Schieber 10 in den Behälter 8 aufgegeben. Im Behälter 8 wird das PET-Granulat weiter erwärmt und weitere getrocknet. Anschließend wird der Schieber 10 geschlossen und das PET-Granulat weiter vorgewärmt und in den Einzug 2 eindosiert. Dabei besteht in der Leitung von dem Behälter 8 zum Einzug 2 ein Unterdruck, der mittels einer Pumpe 12 erzeugt wird.

Das PET-Granulat gelangt in den Einzug 2 und wird von dort in lockerer Schüttung in Extrusionsrichtung gefördert. Die Extrusionsrichtung weist in der Zeichnung von links nach rechts.
In dem Einzug 2 findet eine weitere Erwärmung statt.
Für die Erwärmung des PET-Granulats ist ein Heiz-Kühlkreis 15 vorgesehen.
Durch die Trocknung und durch den Unterdruck im Bereich der Dosierung und des Einzuges wird die dem PET-Granulat anhaftende oberflächliche Feuchtigkeit entfernt.

Das PET-Granulat gelangt in den nächsten Extruderabschnitt, nämlich den Planetwalzenextruderabschnitt 3. In dem Planetwalzenextruderabschnitt 3 wird das PET-Granulat zwischen den umlaufenden Planetwalzenspindeln, der Zentralspindel und dem innen verzahnten Extrudergehäuse vielfach geknetet, so daß sich immer neue Oberflächen bilden, von denen die eingeschlossene Feuchtigkeit abdampft. Dabei wird die Temperatur im wesentlichen beibehalten. Das bedingt eine Kühlung, weil beim Kneten die eingebrachte Verformungsenergie in Wärme umgesetzt wird. Kühlung erfolgt mittels eines Heiz-Kühlkreises 16.

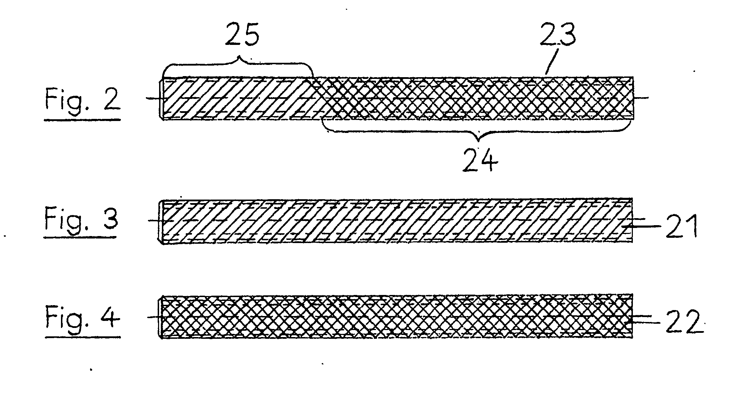

In dem dargestellten Planetwalzenextruderabschnitt finden nach Fig. 3 herkömmliche Planetwalzenspindeln 21 Anwendung. Im Ausführungsbeispiel sind fünf Planetwalzenspindeln vorgesehen, in anderen Ausführungsbeispielen mehr Spindeln oder weniger Spindeln.
Diese Planetwalzenspindeln 21 bilden mehrgängige Schnecken, die sich mit gleichbleibender Neigung über die gesamte Spindellänge erstrecken.
Die Schneckengänge sind in der Zeichnung durch schräg zur Spindellängsachse verlaufende Striche dargestellt.
Die Schneckengänge verlaufen im Ausführungsbeispiel in der Seitenansicht von rechts rechtsgängig, im Uhrzeigersinn. Die Schnecken besitzen außenseitig eine Verzahnung. Die korrespondierende spiegelbildliche Verzahnung findet sich an der Zentralspindel des Planetwalzenextruderabschnittes und dem innen verzahnten umgebenden Gehäuse, so daß die Planetwalzenspindeln 21 sowohl mit der Gehäuseverzahnung als auch mit der Zentralspindel kämmen können.

Fig. 4 zeigt Planetwalzenspindeln 22 eines weiteren Ausführungsbeispiels, welche einerseits die gleichen Schneckengänge wie die Schnecken/Spindeln nach Fig. 3 besitzen. Andererseits besitzen die Spindeln zugleich linksgängig verlaufende Nuten, welche die rechtsgängig verlaufenden Schneckengänge schneiden. Die linksgäng verlaufenden Nuten sind mit Strichen in der Fig. 4 dargestellt, welche die aus Fig. 3 bekannten Schneckengänge rechtwinklig kreuzen. Das ist mit kreuzenden Strichen dargestellt. Durch die kreuzenden Nuten werden die Stege zwischen den Schneckengängen, welche im Querschnitt die Zähne der Verzahnung bilden, unterbrochen. Die zwischen zwei Unterbrechungen verbleibenden Zähne bilden einen stachelartigen/noppenartigen Zahn. Die vielen nebeneinander entstehenden Stachel/Noppen erinnern an das Stachelkleid eines Igels. Daraus resultiert die Bezeichnung Igelverzahnung. Die Unterbrechungen werden im weiteren als Zahnlücken bezeichnet.

Fig. 2 zeigt weitere Planetenspindeln 23 mit einem Teil 25, welcher der Verzahnung nach Fig. 3 nachgebildet ist, und mit einem Teil 24, welcher der Verzahnung nach Fig. 4 nachgebildet ist.

Die abgedampfte Feuchtigkeit wird durch die Einzugschnecke hindurch abgezogen, weil die Schüttlage bzw. Bewegungslage des PET-Granulats in den Schneckengängen ausreichend locker bzw. die Schneckengänge durch das PET-Granulat auch am Ende der Einzugschnecke nur teilweise ausgefüllt werden.
An der Einzugschnecke vorbei gelangt der Abdampf hauptsächlich in die zur Pumpe 12 führende Leitung. In der Leitung wird der Dampf im Kondensator 13 kondensiert und ausgetragen.

Das PET-Granulat wird im wesentlichen mit gleichbleibender Temperatur aus dem Planetwalzenextruderabschnitt 3 in die Austragsschnecke 4 übergeben. Die Austragsschnecke hat gegenüber herkömmlichen Austragschnecken im Ausführungsbeispiel nicht die Aufgabe des Druckaufbaus. Dafür ist die in Extrusionsrichtung nachgeschaltete Schmelzepumpe 5 vorgesehen.

Die Austragschnecke 4 hat die Aufgabe, das PET-Granulat aufzuschmelzen.
Dazu wird die Temperatur des PET-Granulat erhöht. Die Erwärmung erfolgt mittels eines Heiz-Kühlkreises 17 und aufgrund von Verformungsarbeit der Austragschnecke. Die Austragschnecke ist dabei hinsichtlich ihres Schneckenganges und des Schneckenquerschnittes so gestaltet, daß sich ein Druck aufbaut, der zusammen mit der weiteren Verformungsarbeit bei der erreichten Temperatur eine Plastifizierung des PET-Granulats bewirkt.

Der gesamte Extruder ist mit einer durchlaufenden Stange/Rohr 30 durchsetzt. Auf dem Rohr 30 sind verschiedene Aufsätze aufgesteckt und verspannt, so daß im Einzugsbereich 2 eine Einschnecke entsteht, im Bereich 3 eine Zentralspindel ensteht und im Bereich 4 wiederum eine Einschnecke entsteht. Das Rohr 30 ist temperiert. Zur Temperierung dient ein Heiz- und Kühlkreis 31.

Mit der Schmelzepumpe 5 wird der Druck der aus der Austragschnecke 4 austretenden Schmelze so weit erhöht, daß sich die Schmelze gleichmäßig in der Breitschlitzdüse 6 verteilt und aus der Breitschlitzdüse als dünne Schicht 20 austritt. Die dünne Schicht wird sofort von gekühlten Kalanderwalzen 7 aufgenommen und stark abgekühlt und auf ein gewünschtes Dickenmaß gebracht, so daß eine gewünschte PET-Folie entsteht.
Zur Kühlung der Kalanderwalzen 7 ist ein Kühlkreis 18 vorgesehen.

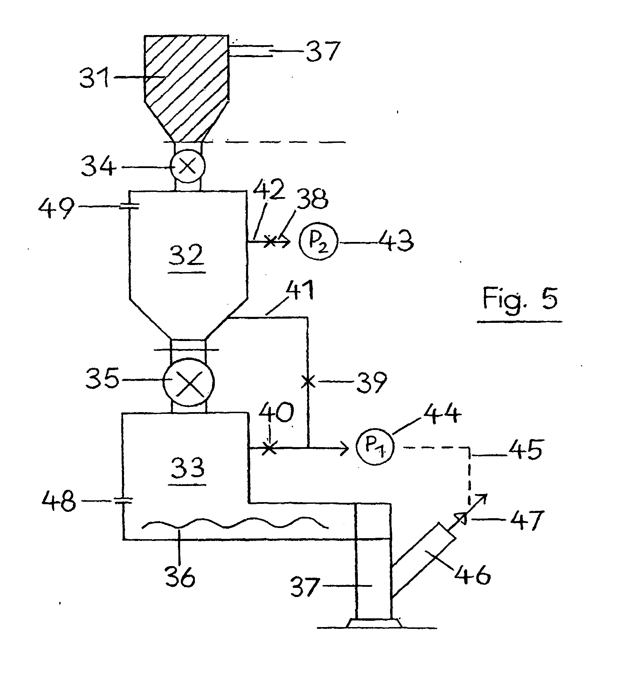

Fig. 5 zeigt die Materialzuführung eines anderen Ausführungsbeispiels.
Dabei ist eine Zuführung 37 für PET-Granulat vorgesehen.
Die Zuführung 37 führt in einen trichterförmigen Aufgabebehälter 31.
Der Aufgabebehälter 31 ist über einem Schleusenbehälter 32 angeordnet.
Der Schleusenbehälter 32 ist über einem weiteren Schleusenbehälter 33 angeordnet.
Von dem Schleusenbehälter 33 führt eine Austragsschnecke 36 zu einem Fall 37.
Aus dem Fallrohr 37 gelangt das PET-Granulat in einen Extruder.
Zwischen den beiden Behältern 31 und 32 ist eine Schleuse/Schieber 34 vorgesehen, zwischen den Behältern 32 und 33 eine Schleuse/Schieber 35.
Alle Behälter 31,32,33 und das Fallrohr 37 werden beheizt.
Alle Behälter 31,32,33 und das Fallrohr 37 werden evakuiert. Dazu sind Saugleitungen 42,41,40,46 und 45 und Pumpen 43 und 44 vorgesehen.
In den Saugleitungen 42, 41, 40, 46 und 45 sind Schieber 38, 39, 40 und 47 vorgesehen. Durch die Vorwärmung und die Evakuierung über die Saugleitungen findet eine Vorentgasung des Material statt.
Der Schleusenbetrieb wird über Schalter gesteuert, und zwar einen Min-Schalter48 und einen Max-Schalter 49. Der Min-Schalter 48 gibt Kontakt zum Nachfüllen des Behälters 33, wenn die Behälterfüllung eine Mindestfüllung für die Materialaufgabe in den Extruder erreicht hat. Danach wird die Schleuse/Schieber 34 geschlossen und die Schleuse/Schieber 35 geöffnet, so daß der Materialinhalt des Behälters 32 in den Behälter 33 ablaufen kann. Das Volumen des Behälters 33 ist größer als das Volumen des Behälters 32 ausgelegt, so daß keine Überfüllung des Behälters 33 entstehen kann.
Nach der Entleerung des Behälters 32 wird die Schleuse/Schieber 35 geschlossen und die Schleuse/Schieber 34 geöffnet, so daß PET-Granulat aus dem Aufgabebehälter 31 in den Behälter 32 nachströmen kann. Der Füllvorgang wird durch Schließen der Schleuse/Schieber 34 beendet, wenn ein ausreichender Füllgrad erreicht ist und der Max-Schalter 49 Kontakt gibt.
Die Behälter 32 und 33 werden durch die Saugleitungen über verschiedene Pumpen 43 und 44 evakuiert, wenn die Schleuse/Schieber 34 geschlossen ist. Bei Öffnung der Schleuse/Schieber 34 wird durch Betätigung der Schieber 38 und 39 der Evakuierungsvorgang unterbrochen.

Die Schieber 38,39,40 und 47 finden zur Unterbrechung des Evakuierungsvorganges auch Anwendung, wenn über nicht dargestellte Klappen eine Reinigung der Behälter erfolgen soll.

## Patentansprüche

1. Verfahren zur Verarbeitung von hygroskopischen PET in Granulatform, in Flakes, in Schnitzeln, in Platten, in Filamenten und Agglomeraten unter vorhergehender Trocknung,
wobei das PET auf eine Temperatur unterhalb seines Glaspunktes in einem Raum geknetet wird, so daß sich am Granulat immer neue Oberflächen bilden, ohne daß es zu einer Aufschmelzung kommt, und daß gleichzeitig entgast wird,
wobei das Kneten in einem Planetwalzenextruder oder einem Planetwalzenextruderabschnitt erfolgt, der aus einer umlaufenden Zentralspindel, mit der Zentralspindel kämmende und um die Zentralspindel umlaufende Planetenspindel besteht, die zugleich mit einem innen verzahnten Gehäuse kämmen.

2. Verfahren nach Anspruch 1, **dadurch gekennzeichnet, daß** Schnecken mit Igelverzahnung und/oder Planetwalzenteile mit einer Igelverzahnung verwendet werden.

3. Verfahren nach Anspruch 2, **dadurch gekennzeichnet, daß** normalverzahnte Planetwalzenteile mit igelverzahnten Planetwalzenteilen kombiniert werden.

4. Verfahren nach Anspruch 1 oder 2, **dadurch gekennzeichnet, daß** die Igelverzahnung **dadurch** erzeugt wird, daß die mit linksgängiger oder rechtsgängiger Verzahnung versehene Schnecke oder die mit linksgängiger oder rechtsgängiger Verzahnung versehenen Planetwalzenteile ganz oder teilweise mit andersgängigen Nuten versehen sind, welche die Verzahnung kreuzen.

5. Verfahren nach Anspruch 4, **dadurch gekennzeichnet, daß** Schnecken oder Planetwalzenteile verwendet werden, bei denen die Steigung der Nuten höchstens um 50% von der Steigung der Verzahnung abweicht und/oder

6. Verfahren nach einem der Ansprüche 1 bis 5, **dadurch gekennzeichnet, daß** Planetwalzenteile verwendet werden, bei denen die durch die Nuten verursachten Zahnlücken von zwei korrespondierenden Planetwalzenteile miteinander fluchten oder versetzt zueinander angeordnet sind, wobei der Versatz gleich einem Bruchteil oder einem Mehrfachen der Zahnlücke ist.

7. Verfahren nach einem der Ansprüche 1 bis 6, **dadurch gekennzeichnet, daß** die Entgasung beim Kneten durch Anlegen eines Unterdruckes an den Knetraum erfolgt, wobei
a) eine separate Leitung verwendet wird, die zum Knetraum führt
b) die Entgasung durch die Materialzuführung erfolgt, welche zum Knetraum führt.

8. Verfahren nach Anspruch 7, **dadurch gekennzeichnet, daß** bei Verwendung eines Extruders zum Kneten dieser Extruder vor dem Abschnitt, in dem das Kneten des PET erfolgt, eine Einzugschnecke vorgeordnet ist und das die Einzugschnecke unterfüttert wird.

9. Verfahren nach Anspruch 8, **dadurch gekennzeichnet, daß** an den Materialeinzug des Extruders ein Unterdruck angelegt wird.

10. Verfahren nach Anspruch 9, **dadurch gekennzeichnet, daß** der Materialeinzug über eine oder mehrere Schleusen erfolgt.

11. Verfahren nach Anspruch 10, **gekennzeichnet durch** die Verwendung von parallel angeordneten oder hintereinander angeordneten Schleusen im Materialeinzug.

12. Verfahren nach Anspruch 10 oder 11, **gekennzeichnet durch** eine Vorwärmung des PET in den Schleusen und/oder daß an verschiedenen Stellen eine Unterdruck angelegt wird.

13. Verfahren nach einem der Ansprüche 7 bis 12, **gekennzeichnet durch** separate Vakuumpumpen für jede Unterdruckleitung oder **durch** gemeinsame oder separate Vakuumpumpen für verschiedene Unterdruckleitungen.

14. Verfahren nach Anspruch 10 bis 13, **gekennzeichnet durch** eine Vorentgasung in den Schleusen.

15. Verfahren nach einem oder mehreren der Ansprüche 10 bis 14, **gekennzeichnet durch** Verwendung von Schiebern und/oder Kondensatoren in den Unterdruckleitungen.

16. Verfahren nach einem der Ansprüche 10 bis 15, **gekennzeichnet durch** die Verwendung von Schiebern zwischen den Schleusen.

17. Verfahren nach einem der Ansprüche 10 bis 16, **dadurch gekennzeichnet, daß** die Materialaufgabe in den Extruder über eine Schnecke und einen Fallschacht erfolgt.

18. Verfahren nach Anspruch 17, **gekennzeichnet durch** eine Beheizung und/oder eine Evakuierung des Fallschachtes.

19. Verfahren nach einem der Ansprüche 10 bis 18, **dadurch gekennzeichnet, daß** Schleusenbehälter mit einem Min-Schalter und einem Max-Schalter verwendet werden, die bei Erreichen eines minimalen Füllungsgrades bzw. Erreichen eines maximalen Füllungsgrades Kontakt geben.

20. Verfahren nach Anspruch 19, **gekennzeichnet durch** Verwendung eines Min-Schalters in dem Schleusenbehälter, aus dem die Materialaufgabe in den Extruder erfolgt, und eines Max-Schalters in dem Schleusenbehälter, der über dem anderen Schleusenbehälter angeordnet ist, wobei das Füllungsvolumen dieses Schleusenbehälters geringer als das Füllungsvolumen des anderen Schleusenbehälters ist.

21. Verfahren nach einem der Ansprüche 10 bis 20, **gekennzeichnet durch** die Verwendung von Schleusenbehältern mit Reinigungsöffnungen.

22. Verfahren nach einem der Ansprüche 1 bis 21, **gekennzeichnet durch** Verwendung eines Planetwalzenextruderabschnittes mit einer Länge von höchstens 1200 mm, vorzugsweise einer Länge von 1000 mm bei einem Verzahnungsdurchmesser von 100 mm in der Gehäuseverzahnung.

23. Verfahren nach einem der Ansprüche 1 bis 22, **dadurch gekennzeichnet, daß** das Aufschmelzen des durch Kneten und Entgasen getrockneten PET in einem Ein-Schnecken-Extruderabschnitt erfolgt.

24. Verfahren nach Anspruch 1 bis 23, **dadurch gekennzeichnet, daß** bei dem Aufschmelzen von PET für die Folienherstellung hinter dem für das Aufschmelzen bestimmten Extruderabschnitt eine Schmelzepumpe und danach eine Breitschlitzdüse verwendet werden.

## Claims

1. Method for processing hygroscopic PET in the form of granulate, in flakes, in chips, in sheets, In filaments and agglomerates with prior drying, wherein the PET is kneaded in a cavity at a temperature below its glass point, such that new surfaces are continually created on the surface of the granulate without it melting, and it is simultaneously degassed, wherein the kneading occurs in a planetary roller extruder or a section of a planetary roller extruder, which consists of a rotating central spindle, with planetary spindles that mesh with the central spindle and rotate about the central spindle that at the same time meshes with an internally toothed housing.

2. Method according to Claim 1, **characterised in that** screws with porcupine toothing and/or planetary roller parts with a porcupine toothing are used.

3. Method according to Claim 2, **characterised in that** conventionally toothed planetary roller parts are combined with porcupine toothed planetary roller parts.

4. Method according to Claim 1 or 2, **characterised in that** the porcupine toothing is realised by means of the left-handed or right-handed toothed screw or the left-handed or right-handed toothed planetary roller being totally or partially equipped with grooves running in another direction that cross the toothing.

5. Method according to Claim 4, **characterised in that** screws or planetary roller parts are used, In which the pitch of the grooves differs by at most 50% from the pitch of the toothing.

6. Method according to one of Claims 1 to 5, **characterised in that** planetary roller parts are used, in which the tooth gaps of two corresponding planetary roller parts, created by the grooves, are aligned with each other or are offset to each other, wherein the offset is a fraction or a multiple of the tooth gap.

7. Method according to one of Claims 1 to 6, **characterised in that** the degassing is realised on kneading by the application of a reduced pressure to the kneading cavity, wherein
a) a separate piping Is used that leads to the kneading cavity
b) the degassing is realised by material feeding that leads to the kneading cavity.

8. Method according to Claim 7, **characterised in that** on using an extruder for kneading, a feed screw is disposed upstream of this extruder in front of the segment in which the kneading of the PET occurs and that the feed screw is starve fed.

9. Method according to Claim 8, **characterised in that** a reduced pressure is applied to the material feed of the extruder.

10. Method according to Claim 9, **characterised in that** the material feed is realised through one or a plurality of locks.

11. Method according to Claim 10, **characterised by** the use of locks disposed in parallel or behind one another in the material feed.

12. Method according to Claim 10 or 11, **characterised by** a preheating of the PET in the locks and/or that a reduced pressure is applied in various places.

13. Method according to one of Claims 7 to 12, **characterised by** separate vacuum pumps for each reduced pressure line or by common or separate vacuum pumps for different reduced pressure lines.

14. Method according to Claim 10 to 13, **characterised by** a preliminary degassing in the locks.

15. Method according to one or more of Claims 10 to 14, **characterised by** the use of shutters and/or condensers in the reduced pressure lines.

16. Method according to one of Claims 10 to 15, **characterised by** the use of shutters between the locks.

17. Method according to one of Claims 10 to 16, **characterised in that** the material supply into the extruder is realised by a screw and a fall shaft.

18. Method according to Claim 17, **characterised by** a heating and/or evacuation of the fall shaft.

19. Method according to one of Claims 10 to 18, **characterised in that** lock containers are used with a min-switch and a max-switch, which make contact on reaching a minimum degree of fill or on reaching a maximum degree of fill.

20. Method according to Claim 19, **characterised by** the use of a min-switch in the lock container from which the material is supplied to the extruder, and a max-switch in the lock container which is arranged above the other lock container, wherein the filling volume of this lock container is less than the filling volume of the other lock container.

21. Method according to one of Claims 10 to 20, **characterised by** the use of lock containers with openings for cleaning.

22. Method according to one of Claims 1 to 21, **characterised by** the use of a planet roller extruder section with a length of at most 1200 mm, preferably a length of 1000 mm with a tooth diameter of 100 mm in the housing toothing.

23. Method according to one of Claims 1 to 22, **characterised in that** the melting of the PET, dried by means of kneading and degassing, is realised in a single-screw extruder.

24. Method according to Claim 1 to 23, **characterised in that** during melting of the PET for manufacturing film, a melt-pump followed by a slot-cast die are used downstream of the extruder section used for the melting.

## Revendications

1. Procédé de traitement de PET hygroscopiques sous forme de granulés, de flocons, de râpures, en plaques, en filaments et agglomérés, avec séchage préalable, le PET étant pétrit dans une enceinte à une température inférieure à son point de transition vitreuse, de sorte que se forment toujours sur le granulat des surfaces neuves, sans que se produise une mise en fusion, et en ce que simultanément est effectué un dégazage,
le pétrissage étant effectué dans une extrudeuse à rouleau planétaire ou un tronçon d'extrudeuse à rouleau planétaire, qui est formé d'une broche centrale en rotation, de broches planétaires, s'engrenant avec la broche centrale et tournant autour de la branche centrale, qui s'engrènent simultanément avec un boîtier à denture intérieure.

2. Procédé selon la revendication 1, **caractérisé en ce que** des vis à dentures en hérisson et/ou des parties de rouleaux planétaires à denture en hérisson sont utilisées.

3. Procédé selon la revendication 2, **caractérisé en ce que** des parties de rouleaux planétaires à denture normale sont combinées à des parties de rouleaux planétaires à denture en hérisson.

4. Procédé selon la revendication 1 ou 2, **caractérisé en ce que** la vis, munie d'une denture à pas à gauche ou à pas à droite, ou les parties de rouleau planétaire munies d'une denture à pas à gauche ou à pas à droite, sont munies, en totalité ou en partie, de rainures d'un autre pas, qui croisent la denture.

5. Procédé selon la revendication 4, **caractérisé en ce que** des vis ou des parties de rouleaux planétaires sont utilisées, pour lesquelles le pas des rainures s'écarte au maximum de 50 % du pas de la denture.

6. Procédé selon l'une des revendications 1 à 5, **caractérisé en ce que** sont utilisées des parties de rouleaux planétaires pour lesquelles les entre-dents, provoquées par les rainures, de deux parties de rouleaux planétaires correspondants sont alignés ensemble ou sont décalés mutuellement, le décalage étant égal à une fraction ou à un multiple de l'entre-dent.

7. Procédé selon l'une des revendications 1 à 6, **caractérisé en ce que** le dégazage lors du pétrissage est effectué par application d'une pression négative à l'enceinte de pétrissage, où
a) une conduite séparée est utilisée, menant à l'enceinte de pétrissage
b) le dégazage est effectué au moyen d'une amenée de matériau, qui mène à l'enceinte de pétrissage.

8. Procédé selon la revendication 7, **caractérisé en ce que**, en cas d'utilisation d'une extrudeuse pour le pétrissage, en amont de cette extrudeuse, en amont du tronçon dans lequel le pétrissage du PET est effectué, est disposée une vis d'introduction, et **en ce que** la vis d'introduction est munie d'un revêtement de doublage sous-jacent.

9. Procédé selon la revendication 8, **caractérisé en ce qu'**une pression négative est appliquée à l'introduction de matériau de l'extrudeuse.

10. Procédé selon la revendication 9, **caractérisé en ce que** l'introduction de matériau est effectuée par un ou plusieurs sas.

11. Procédé selon la revendication 10, **caractérisé par** l'utilisation de sas, disposés parallèlement ou disposés les uns derrière les autres, dans l'introduction de matériaux.

12. Procédé selon la revendication 10 ou 11, **caractérisé par** un préchauffage du PET dans le sas et/ou en ce qu'en différents emplacements est appliquée une pression négative.

13. Procédé selon l'une des revendications 7 à 12, **caractérisé par** des pompes à vide séparées pour chaque conduite à pression négative, ou par des pompes à vide, communes ou séparées, pour des conduites à des pressions différentes.

14. Procédé selon les revendications 10 à 13, **caractérisé par** un pré-dégazage effectué dans les sas.

15. Procédé selon l'une ou plusieurs des revendications 10 à 14, **caractérisé par** l'utilisation de registres et/ou de condenseurs dans les conduites à pression négative.

16. Procédé selon l'une des revendications 10 à 15, **caractérisé par** l'utilisation de registres entre les sas.

17. Procédé selon l'une des revendications 10 à 16, **caractérisé en ce que** l'alimentation en matériau dans l'extrudeuse est effectuée par l'intermédiaire d'une vis et d'un puits de chute.

18. Procédé selon la revendication 17, **caractérisé par** un chauffage et/ou une évacuation du puits à chute.

19. Procédé selon l'une des revendications 10 à 18, **caractérisé en ce qu'**un récipient à sas, muni d'un interrupteur de minimum et d'un interrupteur de maximum, est utilisé, qui fournissent un contact, lors de l'atteinte d'un degré de remplissage minimal, ou à l'atteinte d'un degré de remplissage maximal.

20. Procédé selon la revendication 19, **caractérisé par** l'utilisation d'un interrupteur de minimum dans le récipient à sas d'où s'effectue l'alimentation en matériaux dans l'extrudeuse, et d'un interrupteur de maximum dans le récipient à sas disposé au-dessus de l'autre récipient à sas, le volume de remplissage de ce récipient à sas étant inférieur au volume de remplissage de l'autre récipient à sas.

21. Procédé selon l'une des revendications 10 à 20, **caractérisé par** l'utilisation de récipients à sas munis d'ouvertures de nettoyage.

22. Procédé selon l'une des revendications 1 à 21, **caractérisé par** l'utilisation d'un tronçon d'extrudeuse à rouleau planétaire, d'une longueur maximale de 1200 mm, de préférence d'une longueur de 1000 mm, pour un diamètre de denture de 100 mm dans la denture de boîtier.

23. Procédé selon l'une des revendications 1 à 22, **caractérisé en ce que** la mise en fusion du PET, séché par pétrissage et dégazage, est effectuée dans un tronçon d'extrudeuse à une vis.

24. Procédé selon les revendications 1 à 23, **caractérisé en ce que**, lors de la mise en fusion du PET pour la fabrication de feuilles, derrière le tronçon d'extrudeuse déterminé pour la mise en fusion, est utilisée une pompe à masse fondue et, ensuite, une buse à fente large.
